# FASCICULE DE BREVET EUROPEEN

(11) **EP 3 303 129 B1**
(45) Date de publication et mention de la délivrance du brevet: **30.09.2020**
(21) Numéro de dépôt: 16733658.5
(22) Date de dépôt: 07.06.2016
(51) Int. Cl.: B64C 39/02

(54) **SYSTÈME DE TRAVAIL À DISTANCE**
REMOTE WORKING SYSTEM
FERNARBEITSSYSTEM

(30) Priorité: 08.06.2015 FR 1555204
(43) Date de publication de la demande: 11.04.2018
(73) Titulaire: Asma & Clement Aerial Advanced Technologies, 94523 Rungis Cedex (FR)
(72) Inventeur: BOUAOUAJA, Asma, 75005 Paris (FR); SERRAT, Clément, 94100 Saint Maur Des Fosses (FR)
(74) Mandataire: Cousin, Geoffroy
(86) Numéro de dépôt international: PCT/FR2016/051352
(87) Numéro de publication internationale: WO 2016/198775

(56) Documents cités:
- EP-A2- 2 003 057
- US-A1- 2007 244 608
- US-A1- 2014 231 594
- US-B1- 6 419 190
- ALBERT ALBERS ET AL: "Semi-autonomous flying robot for physical interaction with environment", ROBOTICS AUTOMATION AND MECHATRONICS (RAM), 2010 IEEE CONFERENCE ON, IEEE, PISCATAWAY, NJ, USA, 28 juin 2010 (2010-06-28), pages 441-446, XP031710205, ISBN: 978-1-4244-6503-3

## Description

La présente invention concerne les systèmes de travail à distance.

Notamment, la présente invention concerne les systèmes comprenant un engin volant sans pilote embarqué (désignés classiquement par les acronymes en anglais « UAV », soit « unmanned aerial vehicle » pour « véhicule aérien sans humain », ou « RPAS », pour « Remotely piloted Aircraft system » pour « système aérien piloté à distance »).

La présente invention se rapporte plus particulièrement à un tel système comprenant un engin volant embarquant un outil.

US 2014/231,594 décrit un exemple dans lequel un engin volant sans pilote embarqué porte un outil utilisé pour ouvrir un bouton de porte.

L'utilisation efficace d'un tel engin passe par un contrôle extrêmement précis du vol, ce qui n'est pas forcément toujours possible, notamment selon les conditions extérieures.

Le document EP2003057 décrit un engin volant autonome ou semi-autonome utilisé pour accomplir des tâches dans des lieux difficiles d'accès. L'engin comprend un bras manipulateur au bout duquel un outil peut être fixé. Les caractéristiques de l'invention qui sont connues du document EP 2 003 057 sont listées dans le préambule de la revendication 1.

L'article Semi-autonomous Flying Robot, écrit par Albert Albers décrit un engin volant pouvant se stabiliser contre une paroi verticale.

Le document US6419190 décrit des engins volants sans pilote utilisé pour nettoyer des fenêtres ou peindre des zones difficiles d'accès.

Ces solutions ne sont pas pleinement satisfaisantes.

Pour pallier ces inconvénients, on prévoit un système de travail à distance. Le système de travail à distance comprend un engin volant.

L'engin volant comprend un appareil volant, sans pilote embarqué, et dont les déplacements sont commandables à distance.

L'appareil volant comporte au moins un rotor à pas variable cyclique ou collectif permettant de modifier l'axe d'orientation de la poussée.

L'engin volant comprend un outil robotisé.

L'outil robotisé comprend une pluralité de segments reliés les uns aux autres par articulations, l'un des segments comportant une portion de montage reliée à l'appareil volant, et un autre segment comportant une zone active de travail.

L'outil robotisé comprend un système d'articulation(s) entre la zone active de travail et la portion de montage autorisant un déplacement relatif de la zone active de travail et de la portion de montage, comprenant au moins une articulation.

L'outil robotisé comprend un système de déplacement commandable adapté, sur commande, pour déplacer l'un par rapport à l'autre deux segments de l'outil robotisé disposés de part et d'autre d'une articulation du système d'articulation(s).

Le système comprend en outre une station de contrôle.

La station de contrôle comporte des afficheurs des paramètres de vol adaptés pour informer un opérateur du fonctionnement de l'engin volant.

La station de contrôle comporte un poste de commande, adapté pour impartir à distance une commande d'un déplacement de la zone active de travail.

Le système comprend un module de stabilisation dudit outil robotisé.

Le module de stabilisation comprend une mémoire adaptée pour stocker une consigne prédéterminée de positionnement de la zone active de travail dans l'environnement,

Le module de stabilisation comprend au moins un système d'acquisition (118) adapté pour déterminer au moins une information relative à l'outil robotisé et pour délivrer cette information.

Le module de stabilisation comprend un calculateur adapté pour déterminer un déplacement de l'appareil volant et/ou une configuration spatiale de l'outil robotisé à partir de la consigne prédéterminée et desdites informations délivrées par le système d'acquisition, pour que l'écart entre la position dans l'environnement de la zone active de travail et la consigne prédéterminée reste inférieure à un seuil prédéterminé.

Ainsi, on prévoit un appareil volant sans pilote embarqué équipé d'une plate-forme manipulant des ustensiles par l'intermédiaire d'un ou plusieurs bras robotisés, permettant par exemple d'effectuer des travaux, et piloté de façon automatique, assistée ou manuelle par un ou plusieurs opérateurs.

Une des applications possibles du système concerne la réalisation de travaux dans des situations difficiles, par leur accès, leur exposition à des risques mécaniques ou chimiques, leur pénibilité, leur répétitivité. De tels travaux sont traditionnellement effectués manuellement ou mécaniquement par un opérateur placé à proximité d'une zone de travail, horizontale ou verticale, et assisté de moyens externes (échafaudages, cordes, nacelles élévatrices,...), l'exposant ainsi à des risques de chutes et aux risques mécaniques intrinsèques à la proximité de la zone de travail et des outils utilisés.

Pour limiter les risques de l'opérateur, des moyens de protection peuvent être mis en place, mais ne permettent pas d'éliminer complètement les risques de blessures, de fatigue physique ou morale dus à la répétitivité.

D'autres méthodes pour la réalisation de ces travaux utilisent la robotique industrielle et permettent de réduire l'exposition des opérateurs en faisant réaliser par un robot certaines tâches.

Toutefois, la capacité de déplacement de ces machines est faible et généralement limitée à des périmètres, balisés, internes à l'entreprise.

Toutes ces méthodes nécessitent des opérateurs spécialisés en amont de la réalisation, pour préparer les moyens d'accès à la zone à traiter.

Le dispositif selon l'invention permet de remédier à ces inconvénients.

Selon des modes de réalisation de l'invention, on peut également avoir recours à l'une et/ou à l'autre des caractéristiques suivantes :
- l'appareil volant comporte l'une et/ou l'autre des caractéristiques suivantes :
   a. au moins quatre rotors, permettant de modifier l'axe d'orientation de la poussée,
   b. au moins un moteur électrique adapté pour entraîner un rotor,
   c. des pales montées sur un rotor,
   d. l'appareil volant porte un capteur, faisant partie du système d'acquisition, notamment optique, LIDAR, ou radio, RADAR, permettant de détecter un environnement de vol, un obstacle et/ou un environnement de travail,
   e. un ordinateur de bord,
   f. une batterie,
   g. un parachute expulsable ou des airbags automatiques ;
- le système comprend en outre un câble reliant l'engin volant à la station de contrôle, le câble présentant l'une et/ou l'autre des caractéristiques suivantes :
   a. Le câble comprend un câble électrique d'alimentation,
   b. Le câble comprend un câble électrique basse tension,
   c. Le câble permet un échange d'informations entre l'appareil volant et la station de contrôle,
   d. Le câble est adapté pour transporter un médium de travail entre le sol et l'engin volant,
   e. Le câble forme un lien de sécurité entre l'engin volant et le sol ;
- Le système comprend en outre un véhicule terrestre ou aquatique mobile portant la station de contrôle ;
   le système d'articulation(s) comprend au moins six axes, notamment au moins sept axes ;
- l'engin volant comporte en outre l'une et/ou l'autre des caractéristiques suivantes :
   a. un mécanisme de déport adapté pour déplacer l'outil robotisé entre un emplacement central et un emplacement déporté par rapport à l'appareil volant,
   b. l'outil robotisé comprend un bras articulé comprenant au moins la portion de montage, et un ustensile actif comprenant la zone active de travail, l'outil robotisé comprenant en outre, préférentiellement, un adaptateur informatique et mécanique permettant de solidariser/désolidariser le bras articulé à/de l'ustensile actif et permettant la commande de l'ustensile en échangeant des informations entre l'ustensile et un ordinateur de bord de l'engin volant ;
- le poste de commande de pilotage est équipé de commandes et de mécanismes de retour de force limitant le débattement et le fonctionnement des commandes en fonction de l'environnement de l'engin volant ;
- le système d'acquisition comprend l'un et/ou l'autre de :
   ▪ capteurs LIDAR ou RADAR portés par l'appareil volant et/ou l'outil robotisé,
   ▪ une centrale inertielle portés par l'appareil volant et/ou l'outil robotisé, notamment la zone active de travail,
   ▪ un encodeur d'au moins une articulation ;
- le système d'acquisition comprend des capteurs d'effort du bras articulé, et le calculateur est adapté pour déterminer un déplacement de l'appareil volant et/ou une configuration spatiale de l'outil robotisé à partir également des mesures des capteurs d'effort ;
- le système comprend en outre un système de positionnement externe à l'appareil volant, notamment au sol, le positionnement de l'appareil volant étant réalisé en outre avec le système de positionnement externe à l'appareil volant ;
- le système présente en outre l'une et/ou l'autre des caractéristiques suivantes :
   - une inclinaison des au moins un rotors de l'appareil volant peut être variée pour modifier un effort exercé par l'outil robotisé,
   - les rotors sont engrenants ;
- le système présente l'une et/ou l'autre des caractéristiques suivantes :
   - le système comprend un système de processeurs adapté, à la réception d'une commande de l'outil robotisé au niveau du poste de commande, pour modifier la poussée de l'appareil volant en fonction d'un changement d'inertie de l'outil robotisé,
   - le système comprend un système de processeurs adapté, à la réception d'une commande de positionnement de la zone de travail au niveau du poste de commande, pour modifier la poussée de l'appareil volant et/ou la configuration spatiale de l'outil robotisé,
   - le système comprend un système de processeurs adapté, à la réception d'une commande de fonctionnement de la zone de travail au niveau du poste de commande, pour modifier la poussée de l'appareil volant et/ou la configuration spatiale de l'outil robotisé en fonction d'une force de réaction exercée sur l'engin volant par le fonctionnement de la zone de travail,
   l'une et/ou l'autre de ces modifications étant le cas échéant apte à être effectuée en prenant en compte en outre l'un et/ou l'autre de :
   - un capteur embarqué de positionnement de l'engin volant,
   - un capteur embarqué de positionnement de l'outil robotisé,
   - un capteur embarqué de positionnement de la zone de travail,
   - un capteur d'effort de l'outil robotisé,
   - un capteur au sol de positionnement de l'engin volant,
   - une règle pré-établie reliant la modification et la commande ;
   - l'information déterminée par le système d'acquisition est relative à l'un et/ou l'autre de :
      - une position, une inertie et/ou un déplacement de l'outil robotisé, de l'appareil volant et/ou de l'engin volant,
      - un effort de réaction exercé sur l'engin volant.

Certains avantages de certains modes de réalisation sont listés ci-dessous.

Le système comporte, selon une caractéristique, une partie assurant le vol par au moins quatre propulseurs capables de fournir la poussée nécessaire pour soulever des charges élevées.

L'assemblage de ces quatre propulseurs permet de générer une poussée différente selon les besoins de mouvement de l'engin volant.

Une caractéristique de ces propulseurs est qu'ils répondent à un haut niveau de réactivité dans le changement de poussée ainsi qu'à une capacité à générer une inversion de poussée permettant des décélérations rapides.

En variante ou en complément, on peut prévoir des rotors comprenant des pales dont le pas est variable de manière réglable au cours d'un cycle de rotation.

Ces propulseurs utilisent des rotors à pas variable collectif ou cyclique. Selon le besoin en couple, ces rotors peuvent être entraînés mécaniquement par un ou des moteurs, conçus pour fournir un nombre de tours constant, en position centrale, ou quatre moteurs indépendants.

Selon un autre mode de réalisation, ces propulseurs peuvent être réalisés par des rotors engrenants et utilisant des ailerons sur les bords de fuite des pales (connus également par l'expression anglaise « servo-flaps »).

Cette partie assurant le vol peut être autonome ou commandée à distance par un ou des opérateurs, les éloignant ainsi des risques potentiels liés à la zone à traiter.

Dans un mode de réalisation, la transmission des informations entre les pilotes et l'appareil volant peut se réaliser sans fil par ondes radio, ou à travers un fil reliant l'appareil volant à la station de contrôle au sol et permettant d'éviter toute perturbation électromagnétique dans les milieux sensibles.

La stabilité du vol est assurée par l'usage d'informations telles que l'accélération, l'inclinaison ou l'altitude de l'appareil volant. Des capteurs LIDAR ou RADAR peuvent venir compléter les capteurs de vol en renseignant l'appareil volant sur son environnement, pour déterminer ses mouvements ou détecter des risques de collisions.

Un système de repérage externe, par exemple au sol, utilisant des techniques optiques, peut servir à renseigner l'appareil volant sur sa position et ses mouvements.

Dans un mode de fonctionnement, ces capteurs permettent de limiter les déplacements ou d'interrompre le mouvement de l'appareil volant pour éviter une collision de l'appareil volant ou de ses accessoires embarqués, et ainsi assister l'opérateur dans son vol, simplifiant les opérations.

Cette information est transmise à l'opérateur via des messages affichés sur son poste de commande, ainsi que par une limitation physique du débattement de ses commandes, simplifiant la compréhension de l'environnement distant pour l'opérateur.

Dans un autre mode de fonctionnement, l'appareil volant peut être capable de maintenir une distance définie par l'opérateur entre l'appareil volant ou un de ses accessoires embarqués et une zone à traiter, virtuelle ou physique, ce qui offre une autonomie à l'opérateur, qui se concentre ainsi sur les travaux à réaliser.

Une caractéristique est la présence d'un outil robotisé industriel fixé à la plate-forme de telle façon qu'il dispose d'un champ d'action non limité par l'envergure ou la disposition des moyens de propulsion de l'appareil. Il offre à l'opérateur une possibilité d'automatiser les travaux répétitifs et de travailler à qualité constante grâce à la répétabilité de la robotique.

Le poste de commande permet à l'opérateur, sur ce point, de définir interactivement des limites de la zone à traiter, de définir des zones à traiter automatiques en suivant des motifs ou des zones manuelles.

L'outil robotisé comprend un bras articulé (aussi dit « bras robotisé »). L'extrémité de ce bras robotisé peut être équipée d'ustensiles adaptés ou spécialement conçus afin de pouvoir réaliser les travaux que l'opérateur aurait normalement dû réaliser directement.

Dans un environnement lié au domaine du bâtiment, de tels ustensiles peuvent être des ustensiles de rénovation, de perçage, de découpe, de décapage, qu'ils génèrent ou non une action physique de réaction sur la zone à traiter.

Des ustensiles tels que des caméras dans le domaine visible, infrarouge ou thermique, peuvent aussi être portés par le bras robotisé.

Des profils de réaction des ustensiles, prédéfinis ou conçus en temps réel, utilisés pour moduler les instructions de l'opérateur et utilisant les informations des capteurs, permettent à l'appareil volant d'anticiper et de réagir face aux réactions dues à la mise en œuvre desdits outils en appliquant, par exemple, une poussée progressivement importante pour contrer la force de réaction engendrée par l'ustensile.

Selon la nécessité et les capacités de l'ustensile, des capteurs situés dans l'ustensile, le bras robotisé ou la partie volante peuvent servir à commander automatiquement l'ustensile, ou informer l'opérateur qui transmet alors la commande de fonctionnement.

Dans un mode de fonctionnement, les commandes de l'opérateur sur le fonctionnement de l'ustensile peuvent être mixées aux commandes de l'appareil volant pour affiner le résultat de l'utilisation de l'ustensile, ou interdire cette utilisation en cas de nécessité, facilitant ainsi la tâche de l'opérateur.

Le mouvement du bras robotisé peut être assuré de façon automatique par l'engin volant pour corriger les déplacements parasites dus aux conditions extérieures telles que le vent, ou pour pouvoir replacer l'engin volant de façon optimum sans modifier les mouvements de l'ustensile par rapport à l'environnement.

Ses commandes peuvent être, elle aussi mixées aux commandes de l'opérateur pour affiner le résultat final de l'utilisation de l'ustensile.

Une caractéristique est l'utilisation d'un ou plusieurs fils pour faire transiter les informations et le courant d'alimentation entre l'appareil volant, le bras robotisé et l'ustensile et le sol. Cette caractéristique permet la réalisation de travaux sur des durées prolongées sans devoir interrompre le vol. Ces fils peuvent être complétés par un câble servant de lien de sécurité limitant les débattements de l'appareil volant par rapport au sol en cas de dysfonctionnement majeur.

Dans un mode de réalisation, un ou des fils complémentaires peuvent être ajoutés afin de faire monter ou descendre des flux de matières ou de données.

Les dessins annexés illustrent:
La figure 1 représente en vue droite, le dispositif selon un mode de réalisation.
La figure 2 représente une configuration possible pour l'industrie du divertissement et nécessitant une mobilité.
La figure 3 représente une configuration de l'écran aidant au pilotage de l'appareil.
La figure 4 représente une configuration possible pour l'entretien de surface verticale.
La figure 5 représente une configuration particulière où les rotors peuvent s'incliner pour augmenter la poussée dans une direction.
La figure 6 représente une configuration utilisant des rotors engrenants.

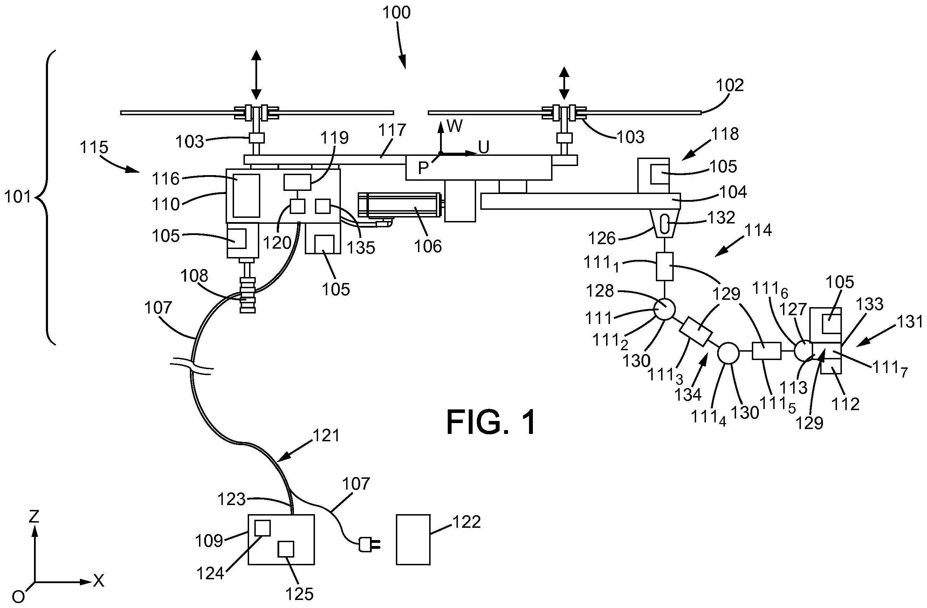

En référence à ces dessins, le dispositif 100 est constitué d'un engin volant 101 et d'une station de contrôle 109. On désigne par « engin volant » un système comprenant un appareil volant 115 proprement dit et au moins un outil robotisé 114 porté par l'appareil volant 115. L'appareil volant 115 est un appareil sans pilote embarqué. Il comporte un châssis 117 ou structure mécanique assurant sa cohésion d'ensemble. Il comporte au moins un rotor 103 porté par le châssis 117. Dans l'exemple présenté, l'appareil volant 115 compte au moins 4 rotors portés en différents emplacements du châssis, par exemple selon un quadrilatère en vue de dessus (sur la vue plane de la figure 1, seuls les deux rotors d'un premier côté sont visibles, les deux autres, d'un deuxième côté, étant masqués par les premiers).

On peut définir arbitrairement un référentiel (P, U, V, W) lié à l'appareil volant 115. Par exemple, le point P est le centre de masse de l'appareil volant. Le trièdre U, V, W peut être défini de la manière suivante : la direction W est l'axe moyen de rotation des rotors (donc sensiblement proche de la verticale en condition normale) . La direction U est une direction du plan orthogonal à la direction W, par exemple reliant deux rotors donnés, et la direction V complète le trièdre.

On utilise des rotors 103 à pas variables cycliques ou collectifs. Le pas collectif est le mécanisme qui place, pour un seul rotor, toutes les pales en même temps à la même inclinaison. Il génère alors une portance uniforme sur toute la surface couverte par le rotor. Si les quatre rotors n'emploient que le mécanisme de pas collectif, alors on déplace l'appareil volant en faisant varier les quatre portances différentes.

Le pas cyclique est le mécanisme qui permet de modifier l'angle de la pale quand elle passe à une certaine position dans sa rotation autour de l'axe du rotor. Si on emploie pour chaque rotor un pas cyclique, on dispose d'une multitude de portances différentes à chaque position de chaque pale pour chaque rotor, augmentant ainsi l'agilité. On utilise notamment des rotors permettant un changement de la poussée exercée par le rotor, voire même une inversion du sens de poussée. En variante ou en complément, on peut prévoir des rotors comprenant des pales dont le pas est variable de manière réglable au cours d'un cycle de rotation. De tels rotors 103 permettent de contrôler la répartition de la poussée parmi les rotors, afin de pouvoir réagir rapidement aux perturbations internes, comme la force de réaction appliquée sur l'appareil volant 115 au cours de l'utilisation des outils (voir ci-dessous), ou externes, comme le vent.

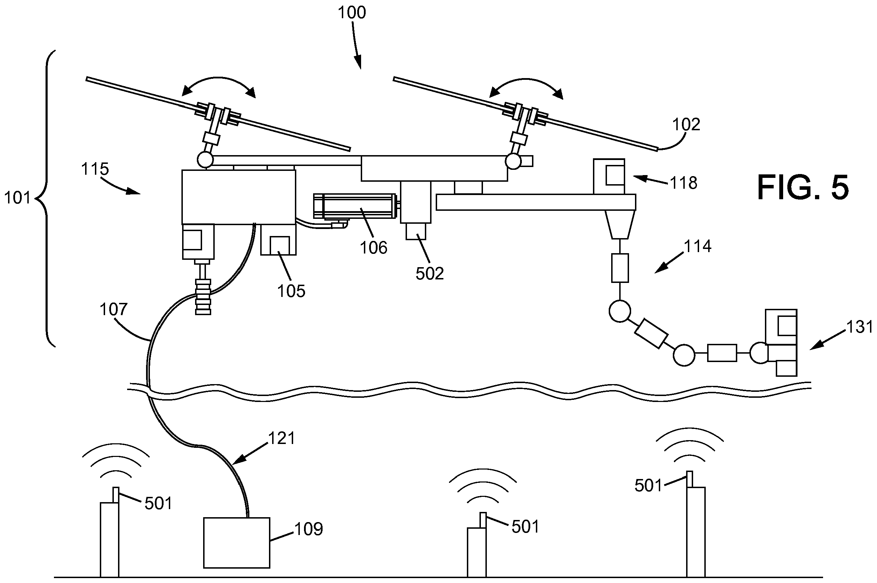

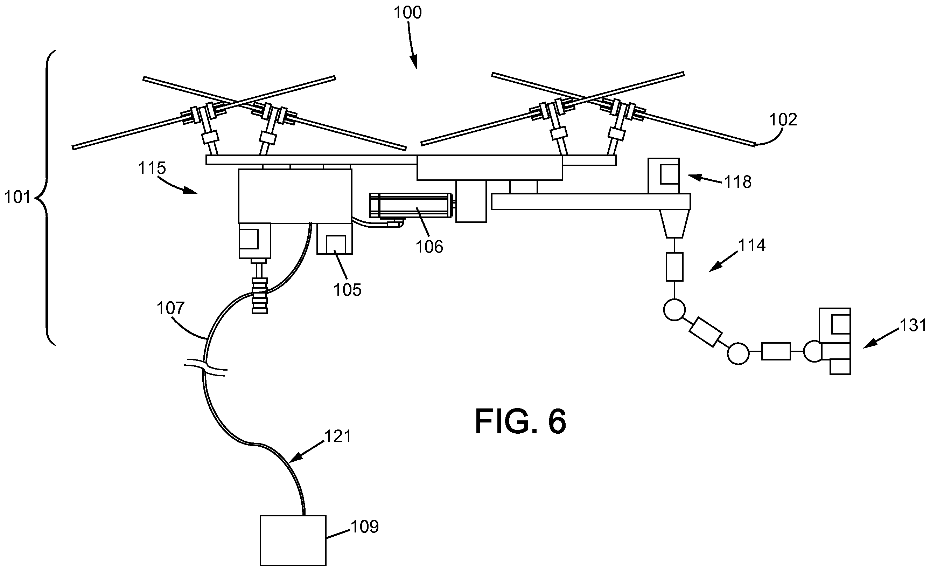

Dans une configuration particulière, ces rotors à pas variables 103 sont au nombre de 8 (4 x 2) et disposés de façon engrenante, comme représenté sur la figure 6, pour augmenter la poussée sur une surface réduite. Dans une autre configuration particulière, comme représenté sur la figure 5, ils sont orientables afin de pouvoir diriger leurs poussées, par orientation de l'axe du rotor par rapport à la verticale. Les rotors comportent des pales 102 similaires à celles des hélicoptères et pouvant ainsi bénéficier des avancées technologiques du domaine.

Ces rotors sont entraînés par un ou plusieurs moteurs électriques 106 de type industriel pilotés par des automates industriels, permettant l'utilisation de savoir-faire industriel existant en matière d'automatisation. Comme représenté sur la figure 1, selon un exemple, le châssis 117 porte un moteur électrique 106. Le mouvement généré par le moteur électrique est transmis aux rotors 103 par l'intermédiaire d'une transmission (non représentée).

Le châssis 117 porte également un ordinateur de bord 110. L'ordinateur de bord 110 comporte un processeur 119 et une mémoire 120.

Le positionnement de l'appareil volant et la détection d'obstacles se font par l'intermédiaire d'un système d'acquisition 118.

Par « position » ou « positionnement », on entend à la fois la localisation dans l'espace de l'appareil volant, ainsi que son orientation par rapport à un trièdre (X, Y, Z) du référentiel terrestre. L'axe Z correspond par exemple à la verticale, et le plan X-Y au plan horizontal, une direction X étant choisie au moment de l'initialisation du système (par exemple alignée avec la direction U à ce moment), et l'axe Y complétant le trièdre. On peut également choisir une origine O du référentiel terrestre par rapport à laquelle la position peut être exprimée.

Le système d'acquisition 118 peut comprendre au moins un capteur 105 embarqué sur l'appareil volant 115. Un tel capteur 105 est par exemple fixé sur le châssis 117, ou solidaire de celui-ci. On peut utiliser plus particulièrement un système de tels capteurs 105, comprenant une pluralité de tels capteurs 105. Dans ce cas, les capteurs 105 sont répartis en divers emplacements de l'appareil volant, et sont orientés de manière à couvrir un champ de détection qui entoure l'appareil volant 115, ou une partie de celui-ci. L'exemple représenté sur la figure 1, simplifié, illustre deux capteurs 105, 105' portés par le châssis 117. De manière purement illustrative, les capteurs 105, 105' sont portés par l'ordinateur de bord 110. Un capteur 105 est orienté de manière à définir un champ de détection autour d'un plan horizontal, et un autre capteur 105' est orienté de manière à définir un champ de détection autour d'un plan vertical, et orienté vers le bas.

A titre de capteurs 105, on utilise par exemple des télémètres 105, adaptés pour déterminer la distance d'un point en regard. On peut par exemple utiliser des télémètres LIDAR (si autorisé par l'application) ou RADAR. On peut par exemple utiliser des télémètres bidimensionnels, permettant de déterminer la distance d'un point le plus proche du capteur dans un plan, ainsi que le vecteur entre ce point et le capteur.- En alternative ou en complément, on peut utiliser des télémètres tridimensionnels, permettant de déterminer la distance d'un point le plus proche du capteur dans un secteur tridimensionnel de l'espace, ainsi que le vecteur entre ce point et le capteur. Le système de capteurs permet de donner une information quant à l'environnement de vol, d'éventuels obstacles, et l'environnement de travail. Les informations sont enregistrées dans la mémoire 120. Elles peuvent être traitées en partie ou en totalité à bord de l'appareil volant 115 par l'ordinateur de bord 110. A partir des informations, et d'une connaissance prédéterminée de l'encombrement de l'appareil volant 115, stockée dans la mémoire 120, l'ordinateur de bord 110 peut déterminer une distance entre l'appareil volant et un obstacle.

On peut également utiliser un baromètre pour déterminer l'altitude de l'appareil volant.

Un système de repérage externe, par exemple au sol, utilisant des techniques optiques, peut servir à renseigner l'appareil volant sur sa position et ses mouvements. Cette possibilité est illustrée sur la figure 5 (la figure 5 représente également les rotors inclinables, cette caractéristique étant indépendante de l'utilisation d'un système de repérage externe). On dispose d'un certain nombre de balises 501, par exemple au moins trois balises non-coplanaires, de position connue dans le référentiel terrestre. Les balises sont disposées dans un espace circonscrivant la projection au sol de la zone à traiter. Ces balises 501 émettent chacune un signal qui lui est propre dans l'espace. On dispose d'un récepteur 502 apte à recevoir les signaux émis par chaque balise, et à discriminer ces signaux. Le récepteur 502 est embarqué sur l'appareil volant. L'ordinateur de bord calcule la position du récepteur 502 par triangulation des signaux obtenus depuis les balises 501. Un tel système est similaire au système de positionnement au sol connu sous l'acronyme GPS (de l'anglais « ground positionning system ») en remplaçant les satellites par des balises au sol.

Le système comprend également une station de contrôle 109. La station de contrôle 109 est au sol. La station de contrôle 109 permet de contrôler l'appareil volant 115 à distance. La station de contrôle 109 sera décrite plus en détail plus loin. Pour commencer, on peut indiquer que la station de contrôle 109 comporte un processeur 124. La station de contrôle 109 comporte également un module de communication 125 pour communiquer avec l'appareil volant 115. Il s'agit notamment de permettre une communication entre le processeur 124 de la station de contrôle, et le processeur 119 de l'appareil volant 115.

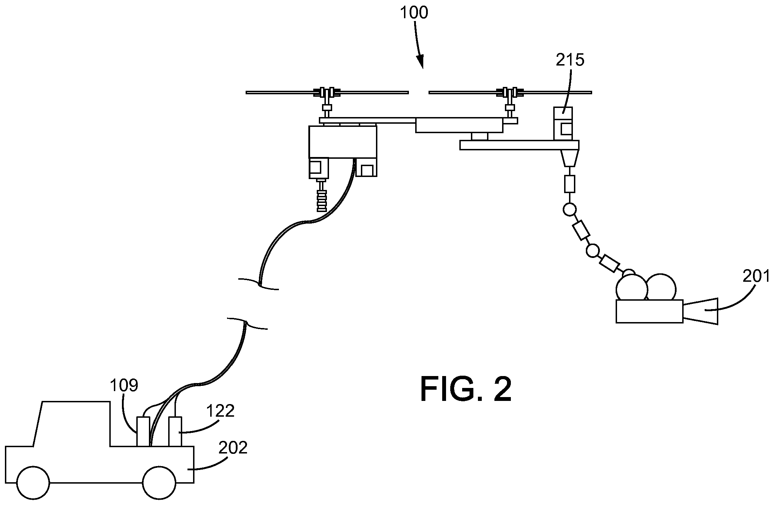

Un câblage 121 peut relier l'appareil volant 115 au sol. Le câblage 121 comprend par exemple des câbles électriques d'alimentation des différents composants électriques de l'engin volant reliant l'appareil volant 115 à une ou plusieurs sources d'énergie 122 au sol. On peut avoir recours à un câble haute tension (quelques centaines de volts) et un câble basse tension 107 (quelques dizaines de volts) isolés l'un de l'autre. La source d'énergie 122 comprend par exemple une prise secteur, un groupe électrogène, une prise électrique embarquée sur un véhicule, etc... Une telle disposition offre une autonomie illimitée à l'appareil volant 115. Le câblage 121 peut également comprendre un câble 123 reliant une station de contrôle 109 à l'appareil volant 115. Le câble 123 permet le transfert d'informations entre la station de contrôle 109 et l'appareil volant 115, dans un sens et/ou dans l'autre. Dans une configuration particulière, comme représenté sur la figure 2, il est possible de disposer la station de contrôle 109 sur un véhicule 202, augmentant ainsi la mobilité du système. Ces câbles 123 (par exemple électrique ou optique) permettent aussi l'échange d'informations entre l'appareil volant 115 et la station de contrôle 109, afin de décharger l'appareil volant des calculs complexes, et de limiter le poids de l'informatique embarquée. Ainsi, selon les modes de réalisation, les tâches de calcul peuvent être réparties entre le processeur 119 et le processeur 124. Ainsi, dans la présente description, quand on dit qu'un certain processeur met en œuvre une certaine tâche, il faut comprendre qu'il s'agit d'un mode de réalisation et que, le cas échéant, cette tâche pourrait, au moins en partie, être délocalisée sur un autre processeur communiquant avec ce dernier.

L'appareil volant 115 est équipé d'une batterie 116 qui permet l'atterrissage d'urgence en cas de défaut de l'alimentation par le sol, en délivrant de l'énergie au moteur 106. L'appareil volant 115 peut être équipé d'un mécanisme de réduction de l'énergie d'impact en cas de chute, tel qu'un parachute expulsable ou des airbags automatiques.

Au besoin, le câblage 121 forme un lien de sécurité entre le sol et l'appareil volant 115, de manière à réduire la superficie d'une éventuelle zone de crash.

Dans une configuration particulière, l'appareil volant 115 est équipé d'une colonne lumineuse 108 industrielle permettant de signaler l'état de l'appareil volant 115.

L'engin volant 101 dispose aussi d'un outil robotisé 114 industriel. L'outil robotisé 114 est porté par l'appareil volant 115. L'outil robotisé 114 comporte un bras robotisé 134 et un ustensile 133.

L'outil robotisé 114 comprend une pluralité de segments 129 reliés les uns aux autres par des articulations 130. L'un des segments 129 comporte une portion de montage 126 reliée à l'appareil volant 115, et un autre segment 129 comporte une zone active de travail 131. L'outil robotisé 114 est par exemple un outil s'étendant, dans une configuration de repos, selon une direction principale entre une extrémité comprenant la portion de montage 126 et une extrémité opposée comprenant la zone active de travail 131. Par « zone active de travail », on désigne un emplacement physique d'une partie active de l'outil robotisé.

L'outil robotisé 114 comprend un système d'articulations entre la zone active de travail 131 et la portion de montage 126. Ce système d'articulations autorise un déplacement relatif de la zone active de travail 131 et de la portion de montage 126. Ce système d'articulations comprend au moins une articulation 130.

L'outil robotisé 114 comprend un système de déplacement commandable pour, sur commande, déplacer l'un par rapport à l'autre deux segments 129 de l'outil robotisé disposés de part et d'autre d'une articulation 130 du système d'articulations, selon un degré de liberté. Le système de déplacement comprend par exemple des actionneurs électriques, pneumatiques, hydrauliques, reliant deux segments, ou des moteurs électriques au niveau des articulations.

Selon un exemple, l'outil robotisé 114 compte au moins 6 axes 111, permettant une grande latitude de mouvements. On appelle « configuration » du bras robotisé, notamment sa configuration spatiale, c'est-à-dire une position donnée de celui-ci. Selon un exemple, le bras robotisé 134 compte au moins 7 axes 111, permettant une redondance des axes.

A titre purement illustratif, sur la figure 1, on a représenté le bras robotisé 134 s'étendant dans le plan (U, W). Un premier axe 111₁ permet la rotation des segments ultérieurs autour de la direction W. Un deuxième axe 111₂ permet, dans la configuration illustrée, la rotation des segments ultérieurs autour de la direction V. Dans la configuration illustrée, on a un recours successif à deux autres telles paires d'axes, 111₃ et 111₄, puis 111₅ et 111₆. Un septième axe 111₇ permet une rotation dans le plan du dernier segment c'est-à-dire, sur le dessin, autour de l'axe U. Dans ces modes de réalisation, on peut déplacer la zone active de travail 131 par rapport à la portion de montage indépendamment selon six degrés de liberté, à savoir trois degrés de liberté de translation, et trois degrés de liberté d'orientation. Ainsi, quand on parle de « déplacer » la zone active de travail, on fait référence aussi bien à un mouvement de translation, un mouvement de rotation, ou un mouvement combiné selon 2 à 6 de ces degrés de liberté. Le bras robotisé 134 comporte un contrôleur 132 déterminant, pour un déplacement souhaité de la zone active de travail 131, quels segments 129 déplacer au moyen du système de déplacement afin de répondre à la requête en déplacement, en d'autres termes, dans quelle configuration spatiale placer le bras robotisé.

L'outil robotisé 114 comporte également des capteurs 105 pouvant faire partie du système d'acquisition 118. Le placement de l'outil robotisé 114 dans une certaine configuration spatiale et la détection d'obstacles se font par l'intermédiaire de ces capteurs 105. Ceux-ci peuvent être similaires à ceux précédemment décrits en relation avec le positionnement de l'appareil volant 115 ci-dessus. A titre purement illustratif, on a représenté un capteur 105 au niveau de la portion de montage 126, et un autre capteur 105 proche de la zone active de travail 131.

L'outil robotisé 114 comprend également des capteurs 128 adaptés pour mesurer un fonctionnement de l'outil robotisé 114. Il s'agit par exemple d'encodeurs mesurant le mouvement au niveau de chaque articulation. Il s'agit par exemple de capteurs d'efforts sur chacun des axes 111, qui retournent des informations sur les réactions imposées sur les articulations 130 par les ustensiles 133 de travail. Ces informations sont fournies à l'ordinateur de bord 110 par l'intermédiaire d'une connexion électrique entre l'outil robotisé 114 et l'appareil volant 115, et sont stockées dans la mémoire 120.

Selon un exemple de réalisation, l'outil robotisé 114 est fixé à l'appareil volant 115. Selon une variante, l'outil robotisé 114 est mis à proximité de la zone à traiter grâce à mécanisme de déport 104. L'outil robotisé 114 peut notamment prendre alternativement :
- un emplacement déporté, telle que représenté sur la figure 1, dans laquelle la portion de montage 126 est située de manière périphérique par rapport à l'appareil volant, ou
- un emplacement central, non représenté, dans laquelle la portion de montage 126 est située de manière centrale par rapport à l'appareil volant 115.

Le mécanisme de déport 104 comprend par exemple une glissière à verrou munie également d'un encodeur renvoyant des informations à l'ordinateur de bord.

Un intérêt de ce mécanisme de déport est par exemple de placer l'outil robotisé dans son emplacement central pendant un vol d'approche au cours duquel l'appareil volant se déplace depuis une position de départ vers une position proche de la zone à traiter, et pendant lequel l'outil robotisé 114 est inactif. Dans cet emplacement, l'outil robotisé est notamment maintenu dans une configuration spatiale où il introduit un faible déséquilibre sur l'appareil volant.

Une fois l'appareil volant stabilisé dans une position proche de la zone à traiter, l'outil robotisé peut être placé dans son emplacement déporté en vue du traitement de la zone à traiter. Dans cet emplacement, l'outil robotisé peut dépasser, au moins partiellement, du périmètre de l'appareil volant 115, ce qui permet d'approcher la zone active de travail 131 de la zone à traiter, sans risque de collision entre l'appareil volant 115 et celle-ci.

L'ustensile 133 peut être un ustensile réglable selon un paramètre de réglage. Le contrôleur 132 peut commander le réglage de l'ustensile 133 selon son paramètre de réglage. L'ustensile 133 peut également comprendre un ou des capteurs obtenant une information quant à l'utilisation de l'ustensile.

Selon un exemple, l'ustensile 133 est intégré à l'extrémité du bras robotisé 134.

Selon un autre exemple de réalisation, l'outil robotisé 114 comprend un bras robotisé 134 et un ustensile 133 distincts. Dans ce cas, le bras robotisé 134 comprend la portion de montage 126, les segments 129, le système d'articulations et le système de déplacement. L'ustensile 133 comporte la zone active de travail 131.

Dans ce cas, le bras robotisé comprend une portion d'assemblage 127 pour l'assemblage à un ustensile 133. De plus, ledit bras robotisé 134 comporte un adaptateur informatique et mécanique 113 permettant le contrôle et la commande de l'ustensile 133 attaché ainsi que l'échange d'informations sur l'état de fonctionnement entre l'ustensile 133 et le contrôleur 132 et, le cas échéant, l'ordinateur de bord.

Le cas échéant, l'adaptateur informatique et mécanique 113 est adapté pour la fixation de différents ustensiles 133. L'ustensile 133 est alors fixé de manière amovible au bras robotisé 134. On prévoit ainsi une gamme d'ustensiles pouvant être fixés alternativement au même bras robotisé 134.

Une particularité du dispositif est la stabilisation de la zone active de travail 131, par exemple de l'ustensile de travail 133 fixé sur l'adaptateur 113. Cette stabilisation est effectuée alternativement ou conjointement par :
- des contre-mouvements réalisés par la modulation des poussées des rotors 103,
- le système de déplacement du bras robotisé 134.

Pour cela, des informations caractérisant le mouvement et sa nature sont capturées, stockées dans la mémoire 120, et traitées par un module de stabilisation 135 de l'ordinateur de bord 110. Les informations caractérisant le mouvement peuvent provenir des capteurs 105 précédemment mentionnés. L'environnement autour de l'appareil volant 115 est en effet a priori fixe dans le référentiel terrestre. Si un capteur 105 porté par l'appareil volant détecte un changement de distance d'un obstacle, il s'agit vraisemblablement d'un déplacement de l'appareil volant 115 par rapport à cet obstacle. Les informations caractérisant le mouvement peuvent également provenir de centrales inertielles 112. Comme représenté sur la figure 1, une centrale inertielle 112 est par exemple solidaire en déplacement de l'ustensile 133. Ces données sont manipulées par l'ordinateur de bord 110. En particulier, l'ordinateur de bord est adapté pour traiter des données de positionnement en provenance de divers systèmes pour déterminer la position de l'appareil volant et/ou de la zone de travail. La prise en compte de divers systèmes d'information est effectuée par un algorithme de fusion, par exemple de type Levenberg-Marquardt. En fonction des données caractérisant le mouvement mesurées, l'ordinateur de bord 110 peut décider de modifier la commande des rotors 103 et/ou le système de déplacement de l'outil robotisé 114.

Une consigne de travail peut être affectée à la zone active de travail 131. La consigne de travail est stockée dans la mémoire 120. La consigne de travail peut par exemple comprendre une trajectoire définie dans le référentiel réel. Par trajectoire, on entend localisation et orientation. La consigne de travail peut aussi comprendre une trajectoire définie par rapport à la zone à traiter. Par exemple, pour une tâche de perçage, la consigne de travail pourrait être de se déplacer de quelques centimètres selon la direction initiale du forêt. La consigne de travail peut aussi comprendre une certaine plage. Par exemple, pour une tâche de peinture, la consigne est de translater la zone active de travail tout en maintenant une distance à la zone à traiter comprise entre cinq et dix centimètres.

La zone active de travail 131 peut présenter une trajectoire prédéterminée dans le référentiel terrestre ou dans l'environnement. Une trajectoire est dite prédéterminée quand la position souhaitée dans le référentiel terrestre ou dans l'environnement pour la zone active de travail 131 à un instant ultérieur est déjà connue à un instant antérieur. Cela n'implique pas nécessairement que la trajectoire soit déterminée entièrement dès le début du vol. Il suffit que la trajectoire souhaitée soit connue dès un instant antérieur, la durée entre l'instant antérieur et l'instant présent étant au moins de l'ordre de la durée d'un temps caractéristique nécessaire pour faire accomplir à l'appareil volant 115 un déplacement de l'ordre de l'amplitude de la trajectoire entre ces deux instants. Ainsi, l'actionnement d'une commande de déplacement de la zone de travail permet de déterminer une trajectoire souhaitée pour la zone de travail.

Par exemple, la trajectoire souhaitée peut être fixe dans le référentiel terrestre.

Toutefois, en variante, la trajectoire souhaitée peut comprendre un déplacement de la zone active de travail 131 dans le référentiel terrestre selon un à six degrés de liberté.

Le processeur 119 détermine la position actuelle de la zone active de travail 131 à partir des données de position stockées en mémoire 120.

Le processeur 119 compare la position actuelle déterminée de la zone active de travail 131 avec une position ultérieure souhaitée définie par la consigne stockée dans la mémoire 120.

Si, nonobstant le déplacement prévu pour la zone de travail entre ces deux instants, l'écart entre les deux positions est supérieur à un seuil prédéterminé, le processeur commande un mouvement compensatoire de l'engin volant 101. Ce mouvement compensatoire peut comprendre l'un et/ou l'autre d'un déplacement de l'appareil volant 115 et d'un changement de configuration spatiale de l'outil robotisé 114. On a recours à l'une et/ou l'autre de ces dispositions selon certains critères. Un critère est par exemple l'amplitude de la différence entre l'écart et le seuil. Un autre critère est le degré de liberté du mouvement compensatoire. Un autre critère comprend les conditions de vol. Voici quelques exemples de critères susceptibles d'influer sur la mise en oeuvre du mouvement compensatoire :
- l'accélération du mouvement parasite (l'outil robotisé est le plus rapide pour compenser),
- l'environnement immédiat de l'appareil (est-ce que l'appareil volant ou l'outil robotisé risque une collision en cas de mouvement compensatoire ?),
- l'extension du bras robotisé (si le bras robotisé a atteint ou risque d'atteindre une limite dans une direction, on doit nécessairement utiliser un déplacement compensatoire de l'appareil volant),
- l'amplitude du mouvement compensatoire (si le déplacement est de quelques centimètres, le bras robotisé se repositionnera plus facilement),
- la force appliquée à l'engin volant et générant le mouvement parasite (s'il s'agit d'une rafale de vent, on peut préférer compenser le mouvement longuement par l'action des rotors).

Selon un mode de réalisation :
- l'opérateur émet une commande de positionnement de la zone active de travail, en vue de placer la zone active de travail dans une position souhaitée, il en découle une trajectoire théorique pour la zone de travail,
- cette commande génère l'application d'une certaine poussée au niveau de l'appareil volant et/ou un changement de configuration spatiale de l'outil robotisé, qui conduit à un certain positionnement de la zone active de travail,
- le système d'acquisition détecte le positionnement obtenu,
- le processeur compare le positionnement obtenu avec la trajectoire théorique,
- en cas d'écart significatif entre le positionnement obtenu et la trajectoire théorique, le processeur adapte la poussée exercée par les rotors et/ou le changement de configuration spatiale en vue de faire atteindre la position souhaitée à la zone de travail.

Certains ustensiles sont des ustensiles dits passifs, en ce qu'ils n'exercent pas d'action mécanique sur une zone à traiter. Des exemples de tels ustensiles passifs comprennent la plupart des capteurs. On peut notamment penser à une caméra optique 201, tel que représenté sur la figure 2.

D'autres ustensiles peuvent exercer une action mécanique sur une zone à traiter. Certains exemples seront fournis plus loin. Dans ce cas, la force de réaction exercée par la zone à traiter sur l'outil peut influer sur le déplacement de l'appareil volant 115 ce qui, par conséquence, peut influer sur l'effort appliqué par l'outil sur la zone à traiter, de manière indésirable. Le système décrit ci-dessus peut détecter ces mouvements non souhaités dus à la réaction, et commander en réponse un déplacement de l'engin volant.

En variante ou en compléments, on utilise, dans ce cadre, un ou plusieurs capteurs d'effort portés par l'outil robotisé 114. Chaque capteur d'effort détecte des efforts de réaction appliqués au niveau d'une articulation.

Les informations fournis par les capteurs d'effort peuvent être utilisées par le processeur 119 pour déterminer une manière d'assurer le correct positionnement de la zone active de travail. Par exemple, si les efforts détectés sont d'un niveau faible, le processeur 119 peut déterminer ne contrôler le correct positionnement de la zone active de travail qu'avec l'outil robotisé 114. Si les efforts détectés sont d'un niveau élevé, le processeur 119 peut déterminer contrôler le correct positionnement de la zone active de travail en influant sur le contrôle du vol de l'appareil volant 115. La modification de la poussée de l'appareil volant 115 permet d'équilibrer la force de réaction de la zone à traiter sur l'outil robotisé. Toutefois, la modification de la poussée de l'appareil volant est également susceptible de modifier la position de la zone active de travail. Ce déplacement est alors détecté et compensé comme décrit ci-dessus.

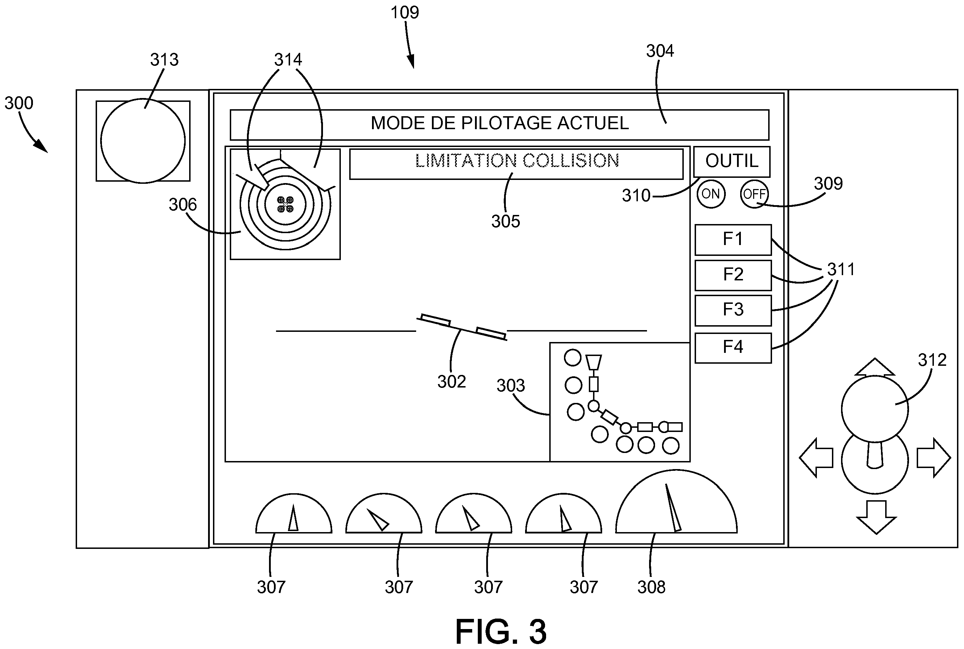

Le système dispose d'une station de contrôle 109 équipée d'un poste de commande de pilotage 300 représenté sur la figure 3. Le poste de commande de pilotage 300 est adapté au pilotage de l'appareil volant 115. Le poste de commande de pilotage 300 est également adapté au pilotage des outils. On peut prévoir de dissocier les deux postes de commande, ou de les intégrer dans une même console, comme représenté. Le poste de commande comporte des commandes 312, permettant de commander à distance l'engin volant.

Ledit poste de commande 300 comporte des afficheurs des paramètres de vol 307 informant l'opérateur du bon fonctionnement de l'appareil. On peut prévoir notamment un voyant 308 dédié à la visualisation des capacités de vol disponibles. On peut également prévoir des boutons/afficheurs relatifs à l'outil de travail, comme par exemple le bouton/voyant 309 permettant de mettre en marche ou d'arrêter l'ustensile, et présentant l'information quant à la marche ou non de l'ustensile, ou un voyant 310 présentant le type d'outil de travail (dans l'exemple, le voyant 310 affiche en toutes lettres le nom de l'outil (ici indiqué par « OUTIL »)). Le poste de commande 300 peut également comporter des commandes. Il est par exemple également équipé de boutons d'accès rapide 311 permettant de changer le mode de vol de l'appareil parmi plusieurs modes de vol disponibles, ainsi que le déclenchement de fonctions préenregistrées. Le mode de vol sélectionné peut être affiché sur un voyant 304.

On peut notamment envisager au moins trois modes de vol différents, entre lesquels l'utilisateur pourra alterner.

Un premier mode de vol est du type d'un pilotage standard: l'utilisateur contrôle le déplacement de l'appareil volant, tout l'engin volant se déplace conformément à cette commande. Un tel mode pourra notamment être utilisé pour déplacer l'engin volant de la station de base à la zone à traiter (ou dans le sens opposé).

Un second mode de vol ne déplace que le bras robotisé, l'appareil volant conservant sa position.

Un troisième mode de vol commande le déplacement de la zone active de travail. Cette commande peut se traduire par un déplacement de l'outil robotisé et/ou de l'appareil volant, selon ce qui semble le plus approprié. Cette détermination prend notamment en compte les informations relatives à l'environnement autour de l'appareil volant, déterminées par le système d'acquisition.

Dans tous les modes, le poste de commande permet donc d'impartir une commande de positionnement, dans le référentiel réel, de la zone active de travail.

Le poste de commande 300 peut également être équipé d'un bouton d'arrêt d'urgence 313. L'actionnement de ce bouton vise à commander le retour au sol de l'engin volant de manière sure et à bref délai.

De plus, le poste de commande 300 permet l'affichage graphique en surimpression vidéo d'informations en temps réel sur l'état du vol. On prévoit par exemple d'afficher la position absolue de l'appareil volant (la fenêtre 302 présente une représentation de l'appareil volant par rapport à l'horizontale, selon une projection donnée, obtenue à partir des données mesurées de positions de l'appareil volant 115). On peut également superposer une incrustation video représentant l'horizontale, et des icônes représentant le roulis, tangage, lacet, de l'appareil volant. On peut également prévoir d'afficher l'environnement de proximité (la fenêtre 306 présente, en vue de dessus, l'appareil volant (au centre), ainsi que deux obstacles 314 identifiés préalablement ou actuellement par les capteurs 105). On peut également prévoir d'afficher l'état du bras robotisé (la fenêtre 303 présente une représentation schématique du bras robotisé, ainsi que des voyants en regard de chaque articulation, affichant un niveau d'effort exercé en chaque articulation). On peut également prévoir un bouton de réglage de l'outil, et un voyant associés. On peut également prévoir d'afficher une fenêtre de communication, par laquelle seront affichés des messages informatifs destinés à l'utilisateur, tels que, par exemple, les alertes en cours (fenêtre 305, qui indique, dans l'exemple « LIMITATION COLLISION », qui indique à l'utilisateur que les déplacements de l'engin volant sont limités pour prévenir un risque de collision).

Des caméras vidéo 215 permettant l'immersion de l'opérateur, la visualisation en temps réel de l'environnement de vol et de l'environnement de travail sont disposées à plusieurs endroits sur l'appareil. Un exemple en est donné sur la figure 2. Le signal vidéo détecté est transmis à la station de contrôle 109 pour y être affiché.

Au niveau de la commande 312, on peut par exemple prévoir un système de sécurité. Le système de sécurité permet d'interdire à l'utilisateur de commander un déplacement jugé interdit par le processeur 124. Si le processeur 124 juge qu'un certain déplacement est interdit, notamment du fait de la proximité immédiate d'un obstacle, déterminée grâce au système d'acquisition, on peut prévoir qu'au niveau du poste de commande, l'actionnement de la commande correspondant à ce mouvement interdit soit interdite. Par exemple, on utilise, au niveau de la commande 312, des mécanismes de retour de force limitant le débattement et le fonctionnement des commandes 312 en fonction de l'environnement de l'engin volant, pour améliorer l'immersion de l'opérateur.

Le poste de commande peut permettre à l'opérateur de définir interactivement des limites de la zone à traiter, de définir des zones à traiter automatiques en suivant des motifs ou des zones manuelles. Pour cela, l'opérateur peut utiliser un outil d'interfaçage (clavier, souris, écran tactile), pour indiquer, par exemple sur la fenêtre 306, les zones à traiter.

Dans une configuration particulière, comme également représenté sur la figure 2, le dispositif est équipé d'une caméra de cinéma 201.

Dans une configuration particulière, l'ustensile applique un effort direct sur la zone à traiter, par exemple un perçage ou un vissage.

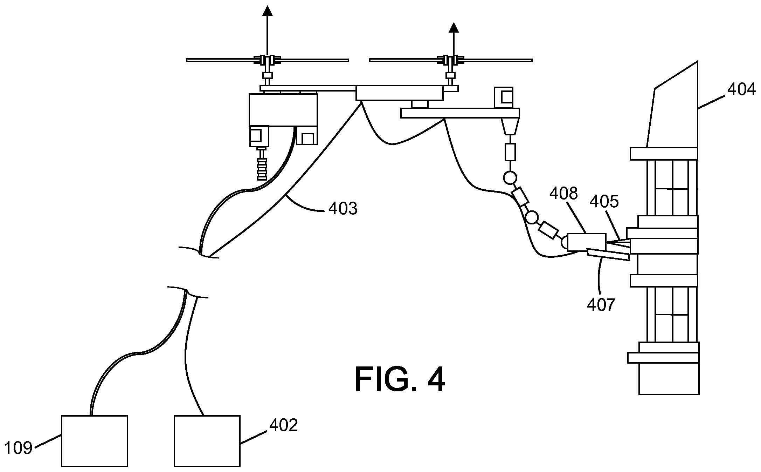

Dans une configuration particulière, comme représenté sur la figure 4, le dispositif est équipé d'un outil de pulvérisation, comme une hydro-gommeuse 408 ou un pistolet à peinture. Dans ces deux dernières configurations, la force engendrée par la projection de matériaux 405 contre un bâtiment 404 peut être contrée par la modulation de la poussée des rotors. Un mécanisme de récupération 407, adjoint à l'ustensile 133, permet de récupérer les déchets générés. Pour pouvoir faire circuler la matière de travail depuis une réserve 402, un tuyau complémentaire 403 est adjoint.

A titre d'exemple non limitatif, le dispositif est particulièrement adapté aux travaux de rénovation de façade des bâtiments. L'ustensile pourrait être un LASER de rénovation. Un autre exemple détaillé sera donné ci-après.

Au départ, l'engin volant 101 est au sol, à proximité de la station de contrôle 109 (éventuellement montée sur un véhicule). L'engin volant 101 est relié à la station de contrôle 109 par un câblage comprenant un câble d'alimentation, un câble de transfert de données, et un filin de sécurité. Le système est démarré.

L'ustensile amovible est assemblé à l'extrémité du bras robotisé 134. Il s'agit ici d'une hydro-gommeuse 408. Celle-ci est reliée par un tuyau 403 à une réserve 402 de matériau décapant. Le tuyau 403 est, si nécessaire, assemblé de manière lâche au câblage par un serre-fil.

Le système est configuré pour indiquer que l'ustensile est une hydro-gommeuse 408. L'utilisation des capteurs d'effort est alors activée.

Le cas échéant, la configuration du système permet d'obtenir un ensemble d'informations prédéfinies relatives à l'ustensile, et utilisables dans le cadre du procédé, tel que le poids, l'inertie de l'ustensile, voire un profil d'effort de réaction en fonction de la distance entre la zone active de travail et la zone à traiter, préétabli lors d'une étape de calibration antérieure de l'ustensile.

Le mécanisme de déport 104 est dans son emplacement central. Le bras articulé est par exemple dans une configuration spatiale compacte impliquant un faible encombrement, et une faible inertie pour l'engin volant.

Un point est défini comme origine du référentiel réel, par exemple la position de la zone active de travail dans sa position d'origine. Le système d'axe utilise par exemple la verticale Z. Pour axe X, on sélectionne l'axe du plan horizontal selon lequel l'hydro-gommeuse, dans la position actuelle, générera un jet de matériau abrasif, l'axe Y complétant le trièdre.

L'opérateur procède à un vol d'approche au cours duquel, au moyen de la commande 312, il commande le déplacement de l'engin volant, depuis le sol en direction de la zone à traiter. Au cours de ce déplacement, le système d'acquisition détecte la proximité d'obstacles (notamment, le bâtiment à traiter ou un bâtiment à proximité de la zone à traiter). Par ailleurs, le processeur 124 calcule de manière répétée la position de la zone active de travail, qui est obtenue simplement à partir de la position initiale de celle-ci, et du changement de position de l'appareil volant au cours du vol d'approche.

L'opérateur peut considérer avoir atteint une position satisfaisante pour l'appareil volant. En variante, le système interdit à l'appareil volant de s'approcher plus de la zone à traiter, comme expliqué précédemment.

L'appareil volant est maintenu en vol de type stationnaire. Au cours de ce vol, la position de l'appareil de volant est susceptible de varier autour d'une position de référence, sous l'effet du vent ou des turbulences aéro-dynamiques. Ces déplacements sont toutefois détectés par le système d'acquisition, qui détermine la localisation et l'orientation instantanées d'un point particulier de l'appareil volant (par exemple le centre de gravité).

L'outil robotisé est placé en configuration prêt à travailler. Ceci implique un déport par l'intermédiaire du mécanisme de déport, et un déplacement de la zone active de travail. Par l'intermédiaire des encodeurs intégrés dans ces mécanismes, il est possible de connaître précisément instantanément la localisation et l'orientation de la zone active de travail dans le référentiel de l'appareil volant. Etant donné que la localisation et l'orientation de l'appareil volant sont quant à elles connues dans l'environnement (soit de manière absolue dans le référentiel réel, soit de manière relative vis-à-vis d'un obstacle), la localisation et l'orientation de la zone active de travail dans l'environnement sont connues instantanément.

Ce déploiement implique un changement d'inertie et de prise au vent de l'engin volant qui, à défaut de modifications simultanées du vol, implique des mouvements de l'engin volant dans le référentiel réel. Ces mouvements sont détectés par le système d'acquisition et, le cas échéant compensés au niveau de l'appareil volant et/ou du bras robotisé.

Le cas échéant, le changement d'inertie du au changement de configuration spatiale de l'outil robotisé est connu au préalable, et les mouvements compensatoires à appliquer sont aussi connus. On peut par exemple avoir recours à des données pré-enregistrées lors de vols d'essai. Dans ce cas, l'ordinateur de bord peut, lorsqu'il reçoit la commande de déploiement de l'outil robotisé, anticiper d'ores et déjà le mouvement compensatoire. Le système d'acquisition a alors surtout un rôle de contrôle et de sécurité.

L'engin volant se trouve alors dans la configuration représentée sur la figure 4, prêt à l'emploi de l'ustensile.

Lors de son emploi, l'ustensile doit suivre une trajectoire prédéterminée. On peut par exemple envisager que l'ustensile doive rester avec son axe de projection horizontal et perpendiculaire à la façade du bâtiment à traiter, et soit déplacé, avec cette orientation, parallèlement à la façade du bâtiment, par exemple selon une succession de lignes horizontales espacées les unes des autres selon la direction verticale, de haut en bas.

Le bras articulé présente une plage de déplacement inférieure à la superficie de la façade à traiter.

Dans cet exemple purement illustratif, dans la position donnée de l'appareil volant, on pourra donc traiter une partie seulement de la façade.

L'opérateur actionne l'hydro-gommeuse 408 par actionnement du bouton de commande 309. La projection sur la façade génère une force de réaction qui implique un moment de force autour du centre inertiel de l'engin volant pris dans son ensemble. La force de réaction est détectée par les capteurs d'effort. Cette mesure est prise en compte pour maintenir la zone active de travail immobile. Cette prise en compte implique un changement rapide de la poussée, et surtout une compensation au niveau du bras articulé, le temps que l'appareil volant se stabilise à nouveau dans cette nouvelle position. Là encore, des données embarquées provenant de tests de calibration préalables peuvent permettre d'anticiper la contre-réaction à appliquer pour compenser le mouvement du à l'effort d'utilisation de l'outil.

Notamment, dans ce cas, on peut avoir recours à des données issues de tests de calibration préalables.

Lors de ce test de calibration, par exemple, pour un outil donné, on réalise une matrice de tests en faisant varier divers paramètres influant sur la force de réaction sur l'engin volant, tel que, notamment, la localisation du point d'application de l'effort par rapport au centre inertiel de l'appareil volant, la localisation du point d'application de l'effort par rapport à la surface à traiter, et/ou un ou plusieurs paramètres de réglage de l'ustensile, et en mesurant la réponse de l'appareil volant à l'application de la force de réaction.

Selon un mode de réalisation :
- l'opérateur émet une commande de fonctionnement de l'ustensile,
- outre de commander le fonctionnement de l'ustensile, cette commande génère la détermination par l'ordinateur de bord d'un changement des paramètres de vol et/ou de configuration spatiale de l'outil robotisé, à partir d'une estimation des efforts appliqués (obtenue à partir des informations de position et de réglage de l'ustensile), et d'une règle prédéterminée reliant les efforts appliqués à un déplacement de l'appareil volant,
- les paramètres de vol et/ou de configuration spatiale de l'outil robotisé sont modifiés simultanément à la mise en œuvre de l'ustensile.

En variante, on n'utilise pas nécessairement de tests de calibration, le système apprenant de lui-même au fur et à mesure de l'utilisation de l'ustensile. Ainsi, les premières utilisations de l'ustensile permettent de calibrer le système. L'ordinateur de bord enregistre les mouvements de compensation générés pour assurer une bonne utilisation de l'ustensile lors des premières utilisations, et se sert de ces enregistrements comme d'une base de données de calibration.

L'opérateur commande, à l'aide de la commande 312, un déplacement de la zone active de travail selon un déplacement linéaire horizontal parallèle à la surface à traiter. Ce déplacement peut être pris en charge essentiellement par le bras articulé, ce qui implique toutefois un changement du moment de force appliqué à l'engin volant, par déplacement du point d'application de la force de réaction appliquée à l'engin volant. Le déplacement associé de l'appareil volant est compensé au niveau du bras articulé pour garantir le respect de la consigne pré-déterminée.

Au bout du segment de ligne horizontale, la zone active de travail est translatée verticalement, et une nouvelle ligne est traitée, et ainsi de suite jusqu'à achèvement du traitement de cette partie de façade.

Une fois cette partie de façade achevée, l'hydro-gommeuse peut être coupée, et l'appareil volant déplacé jusque dans une nouvelle position de départ, où le processus décrit ci-dessus peut être recommencé.

Toutefois, en variante, dans un cas comme celui-ci, on pourrait prévoir de ne pas déplacer la zone active de travail à l'aide du bras articulé, mais de déplacer l'appareil volant le long de la façade de manière continue, auquel cas le processus n'est pas limité à traiter différents emplacements les uns après les autres. Le bras sert alors uniquement à compenser les imperfections de la trajectoire de vol.

Le cas d'utilisation ci-dessus est un exemple simple. Sur l'exemple de la figure 4, la paroi du bâtiment n'est pas plane, mais comporte plutôt une structure en gradins. Le processus simple décrit ci-dessus conduit à rapprocher la zone active de travail de la paroi à traiter, ce qui peut être interdit par risque de collision, et peut donc nécessiter d'éloigner l'appareil volant de la façade.

Si le déplacement n'est pas interdit, il va néanmoins conduire à un changement dans la réaction appliquée par la façade sur l'engin volant, qui sera détecté par les capteurs d'effort et/ou à l'aide de règles pré-déterminées reliant l'effort appliqué à la distance à la façade et, le cas échéant, au paramétrage de l'ustensile.

Le cas échéant, l'hydro-gommeuse est réglable, selon un paramètre de réglage commandable depuis le poste de contrôle 109. Un réglage est par exemple le débit ou la focale du jet de matériau. Ce paramétrage va nécessairement impacter la force de réaction, d'une manière qui sera traitée comme expliqué ci-dessus.

L'exemple ci-dessus concerne le cas simple d'un déplacement de la zone active de travail restant toujours orientée perpendiculairement à la façade.

Toutefois, il n'est pas toujours possible de procéder ainsi. En effet, comme représenté sur la figure 4, la façade peut comprendre des recoins, angles, ou autres particularités géométriques. Le système permet d'orienter la zone active de travail pour traiter ces particularités. La description, faite ci-dessus, de la prise en compte du déplacement de l'engin volant pour garantir le bon positionnement de la zone active de travail, s'applique également à ce cas.

Il s'applique également à la compensation de mouvements non souhaités de l'engin volant, notamment du fait de chocs dus à des actes de malveillance (jet d'objets).

En variante, on pourrait utiliser plusieurs outils robotisés portés par le même appareil volant, et mettre en œuvre les principes présentés ci-dessus en prenant en compte la pluralité d'outils robotisés.

Bien qu'une invention ait été présentée ici de manière générale, il apparait qu'indépendamment de cette invention, il existe dans la description ci-dessus divers systèmes ou sous-systèmes particuliers qui constituent des inventions que le déposant se réserve le droit de protéger ultérieurement indépendamment de l'invention initialement visée.

## Revendications

1. Système de travail à distance (100) qui comprend un engin volant (101) comprenant:
- un appareil volant (115), sans pilote embarqué, et dont les déplacements sont commandables à distance, et
- un outil robotisé (114) comprenant :
∘ une pluralité de segments (129) reliés les uns aux autres par articulations (130), l'un des segments comportant une portion de montage (126) reliée à l'appareil volant (115), et un autre segment comportant une zone active de travail (131),
∘ un système d'articulation(s) entre la zone active de travail (131) et la portion de montage (126) autorisant un déplacement relatif de la zone active de travail (131) et de la portion de montage (126), comprenant au moins une articulation (130),
∘ un système de déplacement commandable adapté, sur commande, pour déplacer l'un par rapport à l'autre deux segments (129) de l'outil robotisé (114) disposés de part et d'autre d'une articulation (130) du système d'articulation(s),
le système comprenant en outre :
- une station de contrôle (109) comportant :
° des afficheurs des paramètres de vol adaptés pour informer un opérateur du fonctionnement de l'engin volant (101),
∘
∘ un poste de commande (300), adapté pour impartir à distance une commande d'un déplacement de la zone active de travail (131),
le système comprenant un module de stabilisation (135) dudit outil robotisé (114) comprenant :
∘ une mémoire (120) adaptée pour stocker une consigne prédéterminée de positionnement de la zone active de travail (131) dans l'environnement,
∘ au moins un système d'acquisition (118) adapté pour déterminer au moins une information relative à l'outil robotisé (114) et pour délivrer cette information,
∘ un calculateur (119) adapté pour déterminer un déplacement de l'appareil volant (115) et/ou une configuration spatiale de l'outil robotisé (114) à partir de la consigne prédéterminée et desdites informations délivrées par le système d'acquisition (118), pour que l'écart entre la position dans l'environnement de la zone active de travail (131) et la consigne prédéterminée reste inférieure à un seuil prédéterminé,
l'appareil volant comportant au moins un rotor (103) à pas variable cyclique ou collectif permettant de modifier l'axe d'orientation de la poussée.

2. Système selon la revendication 1, dans lequel l'appareil volant (114) comporte l'une et/ou l'autre des caractéristiques suivantes :
a. au moins quatre rotors, permettant de modifier l'axe d'orientation de la poussée,
b. au moins un moteur électrique (106) adapté pour entraîner un rotor (103),
c. des pales (102) montées sur un rotor (103),
d. l'appareil volant porte un capteur, faisant partie du système d'acquisition, notamment optique, LIDAR, ou radio, RADAR (105), permettant de détecter un environnement de vol, un obstacle et/ou un environnement de travail,
e. un ordinateur de bord, (110),
f. une batterie (116),
g. un parachute expulsable ou des airbags automatiques.

3. Système selon la revendication 1 ou 2, comprenant en outre un câble (121) reliant l'engin volant (101) à la station de contrôle (109), le câble (121) présentant l'une et/ou l'autre des caractéristiques suivantes :
a. Le câble (121) comprend un câble électrique d'alimentation,
b. Le câble (121) comprend un câble électrique basse tension (107),
c. Le câble (121) permet un échange d'informations entre l'appareil volant et la station de contrôle,
d. Le câble (121) est adapté pour transporter un médium de travail entre le sol et l'engin volant (101),
e. Le câble forme un lien de sécurité entre l'engin volant (101) et le sol.

4. Système selon l'une des revendications 1 à 3, comprenant en outre un véhicule (202) terrestre ou aquatique mobile portant la station de contrôle (109).

5. Système selon l'une des revendications 1 à 4, dans lequel le système d'articulation(s) comprend au moins six axes (111), notamment au moins sept axes.

6. Système selon l'une des revendications 1 à 5, dans lequel l'engin volant comporte en outre l'une et/ou l'autre des caractéristiques suivantes :
a. un mécanisme de déport (104) adapté pour déplacer l'outil robotisé (114) entre un emplacement central et un emplacement déporté par rapport à l'appareil volant (115),
b. l'outil robotisé (114) comprend un bras articulé (134) comprenant au moins la portion de montage (126), et un ustensile actif (133) comprenant la zone active de travail (131), l'outil robotisé (114) comprenant en outre, préférentiellement, un adaptateur informatique et mécanique (113) permettant de solidariser/désolidariser le bras articulé (134) à/de l'ustensile actif (133) et permettant la commande de l'ustensile (133) en échangeant des informations entre l'ustensile (133) et un ordinateur de bord (110) de l'engin volant (101).

7. Système selon l'une des revendications 1 à 6, dans lequel le poste de commande de pilotage (300) est équipé de commandes et de mécanismes de retour de force limitant le débattement et le fonctionnement des commandes (312) en fonction de l'environnement de l'engin volant (101).

8. Système selon l'une des revendications 1 à 7, dans lequel le système d'acquisition (118) comprend l'un et/ou l'autre de :
∘ capteurs LIDAR ou RADAR (105) portés par l'appareil volant (115) et/ou l'outil robotisé (114),
∘ une centrale inertielle (112) portés par l'appareil volant (115) et/ou l'outil robotisé (114), notamment la zone active de travail (131),
∘ un encodeur d'au moins une articulation (130).

9. Système selon l'une des revendications 1 à 8, dans lequel le système d'acquisition (118) comprend des capteurs d'effort du bras articulé (134), et dans lequel le calculateur (119) est adapté pour déterminer un déplacement de l'appareil volant (115) et/ou une configuration spatiale de l'outil robotisé (114) à partir également des mesures des capteurs d'effort.

10. Système conforme à l'une des revendications 1 à 9, comprenant en outre un système de positionnement externe à l'appareil volant, notamment au sol, le positionnement de l'appareil volant étant réalisé en outre avec le système de positionnement (501, 502) externe à l'appareil volant.

11. Système conforme à l'une des revendications 1 à 10, présentant en outre l'une et/ou l'autre des caractéristiques suivantes :
- une inclinaison des au moins un rotors (103) de l'appareil volant (115) peut être variée pour modifier un effort exercé par l'outil robotisé (114) ;
- les rotors (103) sont engrenants.

12. Système conforme à l'une quelconque des revendications 1 à 11, présentant l'une et/ou l'autre des caractéristiques suivantes :
- le système comprend un système de processeurs (120, 124) adapté, à la réception d'une commande de l'outil robotisé (114) au niveau du poste de commande (109), pour modifier la poussée de l'appareil volant (115) en fonction d'un changement d'inertie de l'outil robotisé (114),
- le système comprend un système de processeurs (120, 124) adapté, à la réception d'une commande de positionnement de la zone de travail (131) au niveau du poste de commande (109), pour modifier la poussée de l'appareil volant (115) et/ou la configuration spatiale de l'outil robotisé (114),
- le système comprend un système de processeurs (120, 124) adapté, à la réception d'une commande de fonctionnement de la zone de travail (131) au niveau du poste de commande (109), pour modifier la poussée de l'appareil volant (115) et/ou la configuration spatiale de l'outil robotisé (114) en fonction d'une force de réaction exercée sur l'engin volant (101) par le fonctionnement de la zone de travail (131),
l'une et/ou l'autre de ces modifications étant le cas échéant apte à être effectuée en prenant en compte en outre l'un et/ou l'autre de :
- un capteur embarqué de positionnement de l'engin volant (101),
- un capteur embarqué de positionnement de l'outil robotisé (114),
- un capteur embarqué de positionnement de la zone de travail (131),
- un capteur d'effort de l'outil robotisé (114),
- un capteur au sol (501) de positionnement de l'engin volant (101),
- une règle pré-établie reliant la modification et la commande.

13. Système conforme à l'une des revendications 1 à 12, dans lequel l'information déterminée par le système d'acquisition (118) est relative à l'un et/ou l'autre de :
- une position, une inertie et/ou un déplacement de l'outil robotisé (114), de l'appareil volant (115) et/ou de l'engin volant (101),
- un effort de réaction exercé sur l'engin volant (101).

## Patentansprüche

1. Ferngesteuertes Arbeitssystem (100), das ein Luftfahrzeug (101) umfasst, bestehend aus:
- einem unbemannten Flugapparat (115), dessen Bewegungen ferngesteuert werden können, und
- einem Roboterwerkzeug (114), bestehend aus:
∘ einer Vielzahl von Segmenten (129), die durch Gelenke (130) miteinander verbunden sind, wobei eines der Segmente einen mit dem Flugapparat (115) verbundenen Montageabschnitt (126) und ein anderes Segment einen aktiven Arbeitsbereich (131) aufweist,
∘ einem Gelenksystem zwischen dem aktiven Arbeitsbereich (131) und dem Montageabschnitt (126), das eine relative Bewegung des aktiven Arbeitsbereichs (131) und des Montageabschnitts (126) ermöglicht und mindestens ein Gelenk (130) umfasst,
∘ einem steuerbaren Bewegungssystem, das so ausgelegt ist, dass auf Befehl zwei Segmente (129) des Roboterwerkzeugs (114), die auf beiden Seiten eines Gelenks (130) des Gelenksystems/der Gelenksysteme angeordnet sind, relativ zueinander bewegt werden,
das System umfasst ferner:
- eine Kontrollstation (109), bestehend aus:
∘ Flugparameteranzeigen, die geeignet sind, einen Bediener über den Betrieb des Luftfahrzeugs zu informieren (101),
∘ einer Bedienstation (300), die geeignet ist, einen Fernsteuerungsbefehl für eine Bewegung des aktiven Arbeitsbereichs (131) zu erteilen,
wobei das System ein Stabilisierungsmodul (135) des genannten Roboterwerkzeugs (114) umfasst, bestehend aus:
∘ einem Speicher (120) zum Speichern eines vorbestimmten Sollwerts zur Positionierung des aktiven Arbeitsbereichs (131) in der Umgebung,
∘ mindestens einem Erfassungssystem (118), das geeignet ist, mindestens eine Information in Bezug auf das Roboterwerkzeug (114) zu bestimmen und diese Information zu liefern,
∘ einem Rechner (119), der geeignet ist, eine Bewegung des Flugapparats (115) und/oder eine räumliche Konfiguration des Roboterwerkzeugs (114) ausgehend von dem vorbestimmten Sollwert und den von dem Erfassungssystem (118) gelieferten Informationen zu bestimmen, so dass die Differenz zwischen der Position in der Umgebung des aktiven Arbeitsbereichs (131) und dem vorbestimmten Sollwert unter einem vorbestimmten Schwellenwert bleibt,
wobei der Flugapparat mindestens einen Rotor (103) mit variabler zyklischer oder kollektiver Steigung umfasst, die eine Änderung der Richtungsachse des Schubs ermöglicht.

2. System gemäß Anspruch 1, bei dem das Fluggerät (114) das eine und/oder das andere der folgenden Merkmale aufweist:
a. mindestens vier Rotoren, die eine Änderung der Richtungsachse des Schubs ermöglichen,
b. mindestens einen Elektromotor (106), der zum Antrieb eines Rotors (103) geeignet ist,
c. Blätter (102), die auf einem Rotor (103) montiert sind,
d. das Fluggerät trägt einen Sensor, der Teil des Erfassungssystems ist, insbesondere einen optischen Sensor, LIDAR, oder einen Funksensor, RADAR (105), der es ermöglicht, eine Flugumgebung, ein Hindernis und/oder eine Arbeitsumgebung zu erfassen,
e. einen Bordcomputer (110),
f. eine Batterie (116),
g. einen ausstoßbaren Fallschirm oder automatische Airbags.

3. System gemäß Anspruch 1 oder 2, das ferner ein Kabel (121) umfasst, das das Luftfahrzeug(101) mit der Kontrollstation (109) verbindet, wobei das Kabel (121) das eine und/oder das andere der folgenden Merkmale aufweist:
a. Das Kabel (121) umfasst ein Netzkabel,
b. Das Kabel (121) umfasst eine Niederspannungs-Versorgungsleitung (107),
c. Das Kabel (121) ermöglicht einen Informationsaustausch zwischen dem Fluggerät und der Kontrollstation,
d. Das Kabel (121) eignet sich zur Beförderung eines Arbeitsmediums zwischen dem Boden und dem Luftfahrzeug (101),
e. Das Kabel bildet eine Sicherheitsverbindung zwischen dem Luftfahrzeug (101) und dem Boden.

4. System gemäß einem der Ansprüche 1 bis 3, das ferner ein mobiles Land- oder Wasserfahrzeug (202) umfasst, das die Kontrollstation (109) trägt.

5. System gemäß einem der Ansprüche 1 bis 4, bei dem das Gelenksystem (die Gelenksysteme) mindestens sechs Achsen (111), insbesondere mindestens sieben Achsen umfasst.

6. System gemäß einem der Ansprüche 1 bis 5, bei dem das Fluggerät ferner das eine und/oder das andere der folgenden Merkmale aufweist:
a. einen Versatzmechanismus (104), der geeignet ist, das Roboterwerkzeug (114) zwischen einer zentralen Stellung und einer vom Fluggerät (115) versetzten Stellung zu bewegen,
b. das Roboterwerkzeug (114) umfasst einen Gelenkarm (134), der mindestens den Montageabschnitt (126) umfasst, und ein aktives Utensil(133), das den aktiven Arbeitsbereich (131) umfasst, wobei das Roboterwerkzeug (114) ferner vorzugsweise einen Computer- und mechanischen Adapter (113) umfasst, der es ermöglicht, den Gelenkarm (134) am aktiven Utensil (133) anzubringen/von diesem zu lösen und der die Steuerung des Utensils (133) durch Informationsaustausch zwischen dem Utensil (133) und einem Bordcomputer (110) des Luftfahrzeugs (101) ermöglicht.

7. System gemäß einem der Ansprüche 1 bis 6, bei dem der Bedienstand (300) mit Steuerungen und Rückkopplungsmechanismen ausgestattet ist, die den Weg und die Betätigung der Steuerungen (312) in Abhängigkeit von der Umgebung des Luftfahrzeugs (101) begrenzen.

8. System nach einem der Ansprüche 1 bis 7, bei dem das Erfassungssystem (118) das eine und/oder andere der folgenden Merkmale besitzt:
∘ LIDAR- oder RADAR-Sensoren (105), die von dem Flugapparat (115) und/oder dem Roboterwerkzeug (114) getragen werden,
∘ ein Inertialsystem (112), das von dem Flugapparat (115) und/oder dem Roboterwerkzeug (114), insbesondere dem aktiven Arbeitsbereich (131)getragen wird,
∘ einen Kodierer von mindestens einem Gelenk (130).

9. Ein System gemäß einem der Ansprüche 1 bis 8, bei dem das Erfassungssystem (118) Kraftsensoren des Gelenkarms (134) umfasst, und bei dem der Rechner (119) geeignet ist, eine Bewegung des Flugapparats (115) und/oder eine räumliche Konfiguration des Roboterwerkzeugs (114) auch aus den Messungen der Kraftsensoren zu bestimmen.

10. System gemäß einem der Ansprüche 1 bis 9, das ferner ein Positionierungssystem außerhalb des Fluggerätes, insbesondere am Boden, umfasst, wobei die Positionierung des Fluggeräts zusätzlich mit dem Positionierungssystem (501, 502) außerhalb des Fluggerätes erfolgt.

11. System gemäß einem der Ansprüche 1 bis 10, das ferner das eine und/oder das andere der folgenden Merkmale aufweist:
- eine Neigung von mindestens einem der Rotoren (103) des Fluggeräts (115) kann variiert werden, um eine von dem Roboterwerkzeug (114) ausgeübte Kraft zu ändern;
- die Rotoren (103)greifen ineinander.

12. System gemäß einem der Ansprüche 1 bis 11, das das eine und/oder das andere der folgenden Merkmale aufweist:
- das System umfasst ein System von Prozessoren (120, 124), das geeignet ist für den Empfang eines Befehls des Roboterwerkzeugs (114) an der Bedienstation (109), um den Schub des Fluggeräts (115) in Abhängigkeit von einer Änderung der Trägheit des Roboterwerkzeugs (114) zu ändern,
- das System umfasst ein System von Prozessoren (120, 124), das geeignet ist, bei Empfang eines Befehls zur Positionierung des Arbeitsbereichs (131) an der Bedienstation(109) den Schub des Flugapparats (115) und/oder die räumliche Konfiguration des Roboterwerkzeugs (114) zu ändern,
- das System umfasst ein System von Prozessoren (120, 124), das geeignet ist, bei Empfang eines Funktionsbefehls des Arbeitsbereichs (131) an der Bedienstation (109) den Schub des Flugapparats (115) und/oder die räumliche Konfiguration des Roboterwerkzeugs (114) in Abhängigkeit von einer Reaktionskraft zu ändern, die durch das Funktionieren des Arbeitsbereichs (131) auf das Luftfahrzeug (101) ausgeübt wird,
wobei die eine und/oder die andere dieser Änderungen gegebenenfalls unter zusätzlicher Berücksichtigung des einen und/oder der anderen der folgenden Elemente durchgeführt werden kann:
- einen mitgeführten Sensor zur Positionierung des Luftfahrzeugs (101),
- einen mitgeführten Sensor zur Positionierung des Roboterwerkzeugs (114),
- einen mitgeführten Sensor zur Positionierung des Arbeitsbereichs (131),
- einen Kraftsensor des Roboterwerkzeugs (114),
- einen Bodensensor (501) zur Positionierung des Luftfahrzeugs (101),
- eine vorbestimmte Regel zur Verbindung der Änderung mit dem Befehl.

13. System, gemäß einem der Ansprüche 1 bis 12, bei dem sich die durch das Erfassungssystem (118) bestimmte Information auf das eine und/oder andere der folgenden Merkmale bezieht:
- eine Position, eine Trägheit und/oder eine Bewegung des Roboterwerkzeugs (114), des Flugapparats (115) und/oder des Luftfahrzeugs (101),
- eine auf das Luftfahrzeug (101) ausgeübte Reaktionskraft.

## Claims

1. Remote working system (100) which comprises a flying machine (101) comprising:
- a flying device (115), without an onboard pilot, and the movements of which can be controlled remotely,
- a robotic tool (114) comprising:
∘ a plurality of segments (129) connected to each other by articulations (130), one of the segments comprising a mounting portion (126) connected to the flying device (115), and another segment comprising an active working zone (131),
∘ a system of articulation (s) between the active working zone (131) and the mounting portion (126) allowing a relative displacement of the active working zone (131) and of the mounting portion (126), comprising at least one articulation (130),
∘ a controllable displacement system adapted, on command, to displace two segments (129) of the robotic tool (114) one with respect to the other arranged on either side of an articulation (130) of the system of articulation (s),
the system further comprising:
- a control station (109) comprising:
∘ flight parameter displays adapted to inform an operator of the operation of the flying machine (101),
∘ a control (300), adapted to remotely impart a control of a displacement of the active work zone (131),
the system comprising a stabilization module (135) of said robotic tool (114) comprising:
∘ a memory (120) adapted to store a predetermined setpoint for positioning the active work zone (131) in the environment,
∘ at least one acquisition system (118) suitable for determining at least one item of information relating to the robotic tool (114) and for delivering this information,
∘ a computer (119) suitable for determining a displacement of the flying device (115) and / or a spatial configuration of the robotic tool (114) from the predetermined setpoint and from said information delivered by the acquisition system (118), so that the difference between the position in the environment of the active work zone (131) and the predetermined setpoint remains below a predetermined threshold,
the flying device comprising at least one cyclic or collective variable pitch rotor (103) making it possible to modify the axis of orientation of the thrust.

2. A system according to claim 1, wherein the flying apparatus (114) has one and / or other of the following features:
a. at least four rotors, making it possible to modify the axis of orientation of the thrust,
b. at least one electric motor (106) adapted to drive a rotor (103),
c. blades (102) mounted on a rotor (103),
d. the flying device carries a sensor, forming part of the acquisition system, in particular optical, LIDAR, or radio, RADAR (105), making it possible to detect a flight environment, an obstacle and / or a working environment,
e. an on-board computer, (110),
f. a battery (116),
g. an expellable parachute or automatic airbags.

3. System according to claim 1 or 2, further comprising a cable (121) connecting the flying machine (101) to the control station (109), the cable (121) having one and / or the other of the following characteristics:
a. The cable (121) comprises an electric power supply cable,
b. The cable (121) includes a low voltage electrical cable (107),
c. The cable (121) allows an exchange of information between the flying device and the control station,
d. The cable (121) is adapted to transport a working medium between the ground and the flying machine (101),
e. The cable forms a safety link between the flying machine (101) and the ground.

4. System according to one of claims 1 to 3, further comprising a mobile land or water vehicle (202) carrying the control station (109).

5. System according to one of Claims 1 to 4, in which the articulation system (s) comprises at least six axes (111), in particular at least seven axes.

6. System according to one of claims 1 to 5, in which the flying machine further comprises one and / or the other of the following characteristics:
a. an offset mechanism (104) adapted to displace the robotic tool (114) between a central location and a location offset from the flying device (115),
b. the robotic tool (114) includes an articulated arm (134) including at least the mounting portion (126), and an active tooling (133) including the active work area (131), the robotic tool (114) including moreover, preferably, a computer and mechanical adapter (113) making it possible to secure / separate the articulated arm (134) to / from the active tooling (133) and allowing the control of the tooling (133) by exchanging information between the tooling (133) and an on-board computer (110) of the flying machine (101).

7. System according to one of claims 1 to 6, wherein the piloting control station (300) is equipped with controls and force feedback mechanisms limiting the travel and operation of the controls (312) depending on the environment of the flying machine (101).

8. System according to one of claims 1 to 7, in which the acquisition system (118) comprises one and / or the other of:
∘ LIDAR or RADAR sensors (105) carried by the flying device (115) and / or the robotic tool (114),
∘ an inertial unit (112) carried by the flying device (115) and/or the robotic tool (114), in particular the active working area (131),
∘ a encoder of at least one articulation (130).

9. System according to one of claims 1 to 8, in which the acquisition system (118) comprises force sensors of the articulated arm (134), and in which the computer (119) is adapted to determine a displacement of the flying device (115) and / or a spatial configuration of the robotic tool (114) also from the measurements of the force sensors.

10. System according to one of claims 1 to 9, further comprising a positioning system external to the flying device, in particular on the ground, the positioning of the flying device also being carried out with the positioning system (501, 502) external to the flying device.

11. System according to one of claims 1 to 10, further having one and / or the other of the following characteristics:
- an inclination of the at least one rotors (103) of the flying device (115) can be varied to modify a force exerted by the robotic tool (114);
- the rotors (103) are meshed.

12. System according to any one of claims 1 to 11, having one and / or the other of the following characteristics:
- the system comprises a system of processors (120, 124) adapted, to the reception of a command of the robotic tool (114) at the control station (109), to modify the thrust of the flying device (115) as a function of a change in inertia of the robotic tool (114),
- the system comprises a system of processors (120, 124) adapted, upon receipt of a command to position the work area (131) at the control station (109), to modify the thrust of the flying device (115) and / or the spatial configuration of the robotic tool (114),
- the system comprises a system of processors (120, 124) adapted, to the reception of an operating command of the working area (131) at the control station (109), to modify the thrust of the flying device (115) and / or the spatial configuration of the robotic tool (114) according to a reaction force exerted on the flying machine (101) by the operation of the work zone (131),
one and / or the other of these modifications being, if necessary, able to be carried out taking into account in addition one and / or the other of:
- an on-board sensor for positioning the flying machine (101),
- an on-board sensor for positioning the robotic tool (114),
- an on-board sensor for positioning the zone (131),
- a force sensor (114) of the robotic tool,
- a ground sensor (501) for positioning the flying machine (101),
- a pre-established rule linking the modification and the command.

13. System according to one of Claims 1 to 12, in which the information determined by the acquisition system (118) relates to one and / or the other of:
- a position, an inertia and / or a displacement of the robotic tool (114), of the flying device (115) and / or of the flying machine (101),
- a reaction force exerted on the flying machine (101).
